# EUROPEAN PATENT SPECIFICATION

(11) **EP 1 651 907 B1**
(45) Date of publication and mention of the grant of the patent: **16.03.2011**
(21) Application number: 04748807.7
(22) Date of filing: 04.08.2004
(51) Int. Cl.: F24B 5/02, F23L 9/02

(54) **AFTERBURNER DEVICE FOR FIREPLACES**
NACHBRENNERVORRICHTUNG FÜR FEUERSTELLEN
DISPOSITIF DE BRULEUR POST-COMBUSTION POUR FOYERS

(30) Priority: 04.08.2003 NO 20033457
(43) Date of publication of application: 03.05.2006
(73) Proprietor: JEHI AS, 7043 Trondheim (NO)
(72) Inventor: Hustad, Johan Einar, 7014 Trondheim (NO)
(74) Representative: Charlton, Peter John
(86) International application number: PCT/NO2004/000235
(87) International publication number: WO 2005/012794

(56) References cited:
- EP-A1- 0 464 293
- WO-A1-93/19327
- DE-U1- 29 504 710
- FR-A1- 2 626 063
- NO-C1- 63 947

## Description

The present invention relates to a device according to the introductory part of claim 1.

The use of firewood in stoves for heating is widespread in Norway and represents an energy contribution of approximately 7 TWh/year (2002). In the time period between 1990 and 1999 the use of firewood in stoves increased by 11 percent. The effluents from uncombusted components in stoves comprise particles (PM₁₀), carbon monoxide (CO) and uncombusted hydrocarbons (UHC) in gaseous phase. These emissions are caused by a combination of poor air diffusion in the stove and too low temperatures. It has been established that these emissions are significant on a national scale, and particle emissions from stove heating constitute 60 percent of the total national particle emissions, and 40 percent of the particle emissions of the larger towns, the other major source being traffic fumes. It is largely the older stoves that are responsibly for the large emissions. Data from the National Bureau of Statistics of Norway show that 97 percent of all particle emissions from stoves in Norway come from closed stoves dating from before 1998.

The first stoves with catalysts reducing the amount of uncombusted components in smoke were available on the market towards the end of the 1980s. Other solutions comprising a vault and pre-heated secondary air underneath the vault, also contributing to significantly reduced emissions, appeared later on. Both these conceptual solutions were named clean-burning stoves. Today's requirements on new (clean-burning) stoves are a maximum particle content of 5 g per kilo of combustibles for catalyst stoves and a maximum of 10 g per kilo of combustibles for vault solutions. For traditional wood-burning stoves and closed stoves the particle average (calculated mean over the entire load range) emission factor has been calculated to be 40 g per kilo of combustibles. The requirements are specified in the Technical Regulations of the Planning and Construction Act (the National Technical Construction Department 2000). The current requirements are given in Norwegian Standard NS3059 (Norwegian Standardisation Association 1994).

The emissions of uncombusted components depends on the heating intensity and increase radically at low intensities (loading). Norwegian Standard takes this into account by weighing the emissions at different loading, and two classes have been defined: stoves that burn cleanly with a minimum fuel consumption of less than 0.8 kg/h (class 1) and those that burn cleanly with less than 1.25 kg combustibles per hour (class 2). Problems relating to emissions from traditional stoves are highly significant in an international context as well. Stoves with corresponding technical constructions exist in Europe, the US and Canada. This issue is particularly relevant in Austria, Germany, the northern part of the US and all of Canada, as well as in the Nordic countries. Problems relating to emissions of uncombusted components are also an issue in China, but then with coal instead of firewood as fuel. Problems relating to incomplete combustion are significant in a number of developing countries, for instance in India where an estimated number of 300 million small stoves do not let the smoke out above roof level, mainly discharging it inside buildings. This is one of the greatest health problems in India and in many other countries, *inter alia* in African countries.

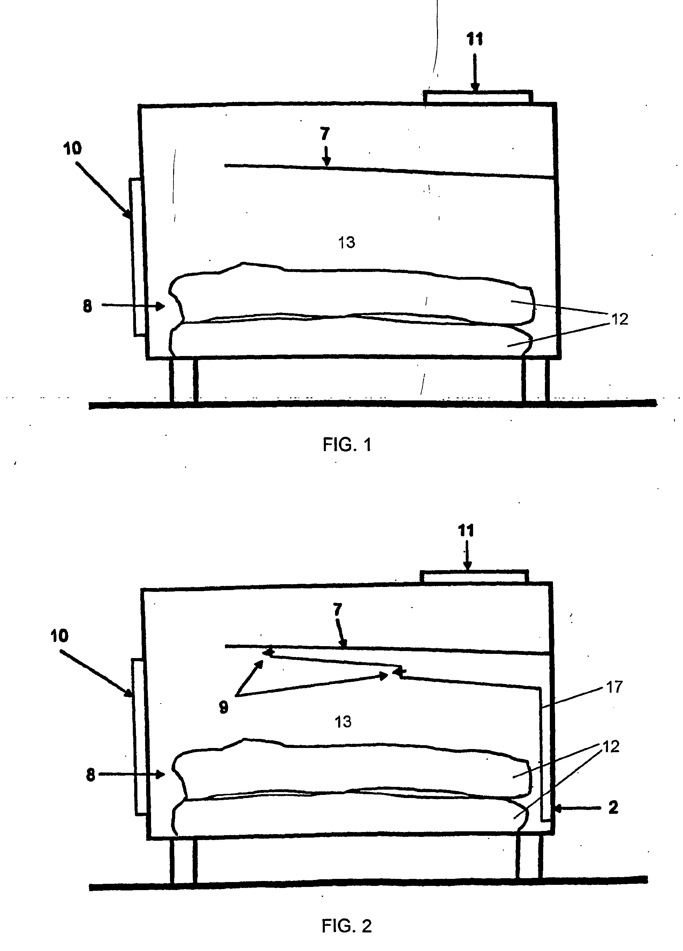

There are a number of different stoves on the market both in Norway and other countries. Typical for most of these Traditional stoves, is that air is supplied through an air inlet 8 in the front of the stove, see Fig. 1 which shows such a traditional construction. This air is then diffused within the stove and mixes with combustible gases which evaporate from the combustibles 12 and react chemically when the temperature is sufficiently high. Moreover, portions of air react directly with the remaining charcoal in the stove (when using wood). The amount of air is controlled by means of an air damper, and the amount is determined by the opening in the air damper and the draft in the chimney. Reference number 10 refers to a door in the stove, and 11 refers to a smoke outlet. A combustion zone 13 is denoted in the room above the combustibles 12.

The so-called clean-burning stoves of the vault type (no catalyst) dominate the Norwegian market today. Fig. 2 shows such a known construction. These stoves are constructed with both a primary air supply and a secondary air supply. There are a number of these stoves with different solutions for both combustion chamber, vault 7 as well as primary air supply 8 and secondary air supply 9. The purpose of the secondary air 9 is to burn out the uncombusted components which turn into gas in the primary zone 13. The secondary air 9 in all these stoves must be pre-heated before it can mix with the uncombusted gases, facilitating a chemical reaction. Without pre-heating, the temperature will be too low and the gases will not ignite. A device 17 for supplying secondary air is integrated in the stove construction, and is usually placed towards the rear of the stove with air outlet 9 just under the vault 7. Norwegian patent no. 63947 shows a so-called layer stove for burning firewood, with a secondary air supply towards the rear of the stove, but with air inlets in different heights through holes in a plate arranged on the inside of the rear wall of the stove. However, in this case both primary and secondary air are supplied both from the front and the rear end of the stove. This stove must be regarded as a rather peculiar construction, as primary air that can be regulated is let in through the front and constant secondary air is let in higher up, and primary and secondary air that can both be regulated are let in through the rear wall. As noted above, this is a ready made stove construction, which does not offer a solution for upgrading traditionally constructed stoves.

Normally, there is not sufficient air at the right places in the traditional stoves, while secondary air devices constitute an integrated part of the stove construction itself in clean-burning stoves, no solution exists to improve the combustion of uncombusted components in older, traditional stoves.

EP-A-0464293 shows an afterburner device for a stove for burning wood or other types of bio-mass, coke or coal, supplying fresh, heated air to an upper zone of the stove's combustion chamber, wherein the device is constituted by a plate, that is folded and provided with holes, the plate having a number of holes or slits near a folded end of the plate, the holes or slits (4) being arranged at the uppermost edge when installed, to allow air to get to the said zone, an at least one secondary air aperture being arranged in a position just above a lower folded end of the plate when it is installed.

The present invention provides an afterburner device for upgrading a traditionally constructed stove without aperture(s) for secondary air for burning wood or other types of biomass, coke or coal, supplying fresh, heated air to an upper zone of the stove's combustion chamber, wherein the device is constituted by a plate, that is folded and provided with holes, the plate having a number of holes or slits near a folded end of the plate, the holes or slits being arranged at the uppermost edge when installed, to allow air to get to the said zone, wherein the plate has folds along all the ends to create a chamber when installed on the inner side of a side or rear wall of the existing traditional stove, and for cooperation with at least one secondary air aperture arranged in said wall upon installation of the plate in the already existing stove, the at least one secondary air aperture being arranged in a position just above a lower folded end of the plate when it is installed, whereby air can be pre-heated while rising up behind the plate, the plate further being provided with holes near a folded end of the plate where the holes are arranged towards the bottom edge when installed, to establish and maintain a pilot flame.

The invention also provides a system which is a combination of the afterburner device and an existing traditional stove constructed without aperture(s) for secondary air.

Further advantageous embodiments are defined in the dependent claims.

In a stove with an after-installed afterburner according to the invention, uncombusted components will burn out and the emissions will be reduced proportionately. The amount of air and the degree of pre-heating are adapted to the individual stove construction by size and location of holes for air supply, as well as the surface area (height and width) of the afterburner.

A detailed description of the present invention is given in the following, with references to the drawings where:
Fig. 1 shows, in cross-section, a non-clean-burning stove of the vault type (prior art);
Fig. 2 shows, in cross-section, a clean-burning stove comprising an integrated secondary air supply (prior art);
Fig. 3 shows, in cross-section, an originally non-clean-burning stove with an after-installed afterburner of the present invention: and
Fig. 4 shows a plane sketch of a preferred embodiment of an afterburner device of the present invention.

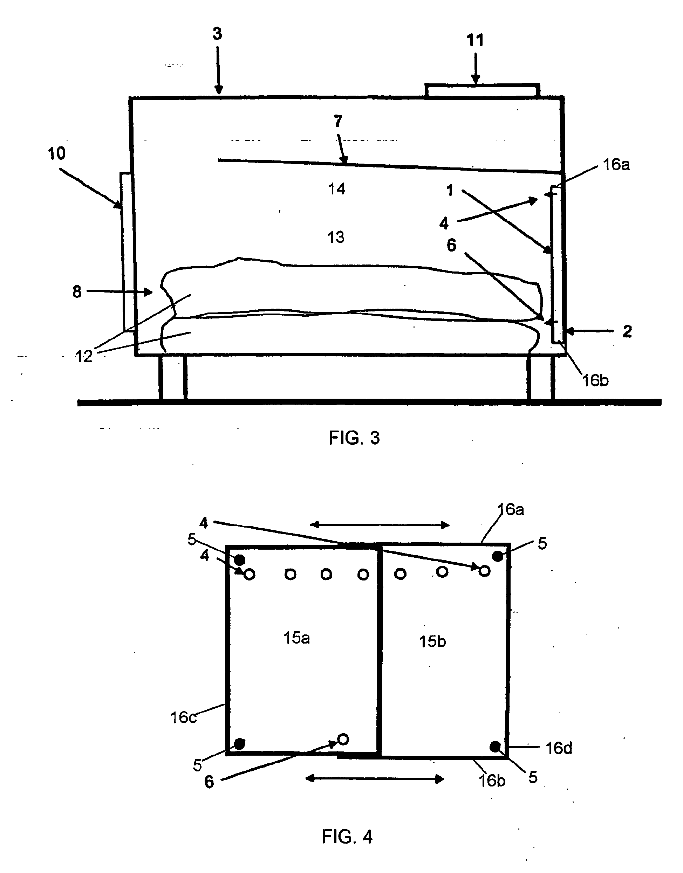

Fig. 3 shows a cross-section of a stove of a traditional type, cf. Fig. 2, but with an afterburner device of the type shown in Fig. 4 attached. The afterburner consists of a folded plate 1 with screw holes 5 for fastening on the inside in the rear and side wall of the stove. Through air holes or slits 4, preferably arranged just under the plate's upper end, pre-heated air can be let into the stove. A hole 6 is drilled into the lower end of the afterburner to establish and maintain a pilot flame. Folds 16a, b, c, d are provided on all four sides of the plate 1, in order for a chamber or flow canal to be created between the plate 1 and the side or rear wall which the plate, or the folds 16a, b, c, d, is/are brought in juxtaposition to.

The plate 1 is preferably rectangular and has a size that is adapted to the size of the wall of the stove in question. In a preferred embodiment, the folded plate can have a folded depth of about 12 mm (the depth of the afterburner) where the air flows through. The height of the afterburner according to the present invention is about 200 mm, and the width can vary between about 150 mm and 250 mm if the plate is adapted for this. This can be arranged by having the plate 1 be made of two parts 15a and 15b which lie on top of each other and can be mutually displaced horizontally, see Fig. 4. The width can then be adjusted and made to fit different stove sizes.

In order to get air into the afterburner 1, holes or slits 2 are drilled through the side or rear plate of the stove, preferably far down in order to allow the air to enter at the bottom of the chamber defined by the folded plate 1. In this manner, air is drawn from outside the stove, in through the drilled hole(s) 2. When the air enters the afterburner 1, it will rise up to the upper part of the afterburner and out through the holes 4 in the plate and out into the upper part of the stove 14 just below the vault 7. As the air runs its course through the afterburner, it will be pre-heated by heat from the flame in the combustion chamber 13 in the stove.

As mentioned above, the hole 6 arranged at the bottom end of the plate 1 establishes and maintains a pilot flame, that is to say that when the combustibles 12 are burning, some air will be sucked in already at the bottom through this hole and ensure an increased combustion near the hole itself. A separate flame will be near the hole and ensure increased heating of the remaining air which is drawn through the chamber behind the plate 1 up towards and through the holes 4, and ensure that the pilot flame ignites the uncombusted inflammable gases at the bottom of the combustion chamber 13.

In the above, it has been mentioned that hole 5 is for fastening plate 1 with screws. The idea is to screw auto-grooving screws into the side/rear wall of the stove. But alternative adhesives could be used, for instance magnetic fastening organs comprising for example four permanent magnets arranged at the plate's corners instead of screw holes. The magnets must be resistant to high temperatures, in the sense that the magnetism does not disappear or is weakened to the extent that they do not adhere. Magnets suitable for use in high temperatures are currently being developed. Another possibility is to use a glue or plastic adhesive of a type which can take the high temperatures that occur in a stove.

The plate 1 does not necessarily have to be rectangular, in the case of some stoves, a trapezoid shape may for instance be more suitable. However, there must be folds along all the ends in order to create the necessary canal/chamber for the air that is to be pre-heated before afterburning in zone 14 to rise up.

A series of experiments have been conducted to document that the afterburner works according to plan. Traditional stoves have particle emissions that vary a great deal depending on the loading on the stove, low loading cause higher emissions. There are also great variations between stoves. Typical particle emission values for traditional stoves are on average 12 g per kilo of combustibles (a variation of between 5 and 17 g per kilo of combustibles) with a load of 2 kg combustibles per hour and 50 g per kilo of combustibles (variation of between 40 g per kilo of combustibles and 60 g per kilo of combustibles) with a loading of 1 kg combustibles per hour.

In laboratory tests, experiments were first conducted with a traditional stove without an afterburner. The results showed emissions of 9 g per kilo of combustibles with a load of 2 kg combustibles per hour and emissions of 35 g per kilo of combustibles with a load of 1 kg/hour. This is somewhat lower than the average values for typical traditional stoves. An afterburner was then installed in the stove, which brought the emissions down to 1 g per kilo of combustibles with a load of 1 kg/hour. In total, this gives a reduction in particle emissions of between 70 and 90 percent, depending on the loading. Compared to the average for traditional stoves, this corresponds to a reduction of between 80 and 92 percent. With an even lower loading down to 0.5 kg combustibles per hour, the emissions increase to 35 g per kilo of combustibles. Traditional stoves have emissions of up to 80 g per kilo of combustibles in this loading range. For comparison purposes, experiments were also conducted with a stove which has been approved as clean-burning. The results show that a traditional stove wherein an afterburner has been installed, gives just as low emissions as a so called clean-burning stove at loading ranges above 1 kg combustibles per hour.

## Claims

1. An afterburner device for upgrading a stove constructed without aperture(s) for secondary air for burning wood or other types of biomass, coke or coal, supplying fresh, heated air to an upper zone (14) of the stove's combustion chamber (13), **characterised in that** the device is constituted by a plate (1), that is folded and provided with holes (4, 6),the plate (1) having a number of holes or slits (4) near a folded end (16a) of the plate (1), the holes or slits (4) being arranged at the uppermost edge when installed, to allow air to get to the said zone (14),
wherein the plate (1) has folds along all the ends to create a chamber when installed on the inner side of a side or rear wall of said stove, and for cooperation with at least one secondary air aperture (2) arranged in said wall upon installation of the plate (1) in the stove, the at least one secondary air aperture (2) being arranged in a position just above a lower folded end (16b) of the plate (1) when it is installed, whereby air can be pre-heated while rising up behind the plate (1), the plate (1) further being provided with holes (6) near a folded end (16b) of the plate (1) where the holes (6) are arranged towards the bottom edge when installed, to establish and maintain a pilot flame.

2. The afterburner device of claim 1,
**characterised in that** the plate (1) consists of two parts (15a, 15b) which can be mutually displaced to provide an adjustable dimension in a lateral direction when installed, for adaptation to stoves of different sizes.

3. System comprising an afterburner device according to claims 1 or 2, and a stove constructed without aperture(s) for secondary air for burning wood or other types of biomass, coke or coal, the system supply allowing to fresh, heated air to an upper zone (14) of the stove's combustion chamber the (13), **characterised in that** the device is constituted by a plate (1), that is folded and provided with holes (4, 6),the plate (1) having a number of holes or slits (4) near a folded end (16a) of the plate (1), the holes or slits (4) being arranged at the uppermost edge when installed, to allow air to get to the said zone (14),
a secondary air aperture (2) being drilled through the side or rear plate of the stove to allow the air to enter at the bottom of the chamber defined by the folded plate (1) and the side and rear wall, the secondary aperture (2) being arranged in a position just above a lower folded end (16b) of the plate (1) when it is installed, whereby air can be pre-heated while rising up behind the plate (1), the plate (1) further being provided with holes (6) near a folded end (116b) of the plate (1) where the holes (6) are arranged towards the bottom edge when installed, to establish and maintain a pilot flame.

4. The system of claim 3,
**characterised in that** the plate (1) consists of two parts (15a,15b) which can be mutually displaced to provide an adjustable dimension in a lateral direction when installed, for adaptation to stoves of different sizes.

## Patentansprüche

1. Nachverbrennungsvorrichtung zum Aufrüsten eines ohne Öffnung (en) für Sekundärluft gebauten Ofens zum Verbrennen von Holz oder anderen Typen von Biomasse, Koks oder Kohle, die einer oberen Zone (14) des Verbrennungsraums (13) des Ofens erwärmte Frischluft zuführt, **dadurch gekennzeichnet, dass** die Vorrichtung von einer Platte (1) gebildet wird, die gefaltet und mit Löchern (4, 6) versehen ist, wobei die Platte (1) eine Anzahl von Löchern oder Schlitzen (4) nahe einem gefalteten Ende (16a) der Platte (1) hat, wobei die Löcher oder Schlitze (4) nach dem Einbau am obersten Rand angeordnet sind, damit Luft zu der genannten Zone (14) gelangen kann,
wobei die Platte (1) entlang allen Enden Faltungen hat, um eine Kammer zu bilden, wenn sie an der Innenseite einer Seiten- oder Rückwand des genannten Ofens angebracht ist, und zum Zusammenwirken mit wenigstens einer beim Einbau der Platte (2) in dem Ofen in der genannten Wand angeordneten Sekundärluftöffnung (2), wobei die wenigstens eine Sekundärluftöffnung (2) an einer Position knapp über einem unteren gefalteten Ende (16b) der Platte (2), wenn sie eingebaut ist, angeordnet ist, wodurch Luft vorgewärmt werden kann, während sie hinter der Platte (1) nach oben steigt, wobei die Platte (1) ferner mit Löchern (6) nahe einem gefalteten Ende (16b) der Platte (1) versehen ist, wobei, im Einbauzustand, die Löcher (6) zum unteren Rand hin angeordnet sind, um eine Dauerflamme einzurichten und zu erhalten.

2. Nachverbrennungsvorrichtung nach Anspruch 1, **dadurch gekennzeichnet, dass** die Platte (1) aus zwei Teilen (15a, 15b) besteht, die nach dem Einbau im Verhältnis zueinander verlagert werden können, um eine einstellbare Dimension in einer seitlichen Richtung zu ergeben zur Anpassung an Öfen verschiedener Größe.

3. System, das eine Nachverbrennungsvorrichtung nach Anspruch 1 oder 2 und einen ohne Öffnung(en) für Sekundärluft gebauten Ofen zur Verbrennung von Holz oder anderen Typen von Biomasse, Koks oder Kohle umfasst, wobei das System die Zufuhr von erwärmter Frischluft zu einer oberen Zone (14) des Verbrennungsraums (13) des Ofens zulässt, **dadurch gekennzeichnet, dass** die Vorrichtung von einer Platte (1) gebildet wird, die gefaltet und mit Löchern (4, 6) versehen ist, wobei die Platte (1) eine Anzahl von Löchern oder Schlitzen (4) nahe einem gefalteten Ende (16a) der Platte (1) hat, wobei die Löcher oder Schlitze (4) nach dem Einbau am obersten Rand angeordnet sind, damit Luft zu der genannten Zone (14) gelangen kann,
wobei eine Sekundärluftöffnung (2) durch die Seiten- oder hintere Platte des Ofens gebohrt ist, um die Luft am Boden der Kammer eintreten zu lassen, die von der gefalteten Platte (1) und der Seiten- und Rückwand definiert wird, wobei die Sekundärluftöffnung (2) an einer Position knapp über einem unteren gefalteten Ende (16b) der Platte (1) angeordnet ist, wenn sie eingebaut ist, wodurch Luft vorgewärmt werden kann, während sie hinter der Platte (1) nach oben steigt, wobei die Platte (1) ferner mit Löchern (6) nahe einem gefalteten Ende (16b) der Platte (1) versehen ist, wobei, im Einbauzustand, die Löcher (6) zum unteren Rand hin angeordnet sind, um eine Dauerflamme einzurichten und zu erhalten.

4. System nach Anspruch 3, **dadurch gekennzeichnet, dass** die Platte (1) aus zwei Teilen (15a, 15b) besteht, die nach dem Einbau im Verhältnis zueinander verlagert werden können, um eine einstellbare Dimension in einer seitlichen Richtung zu ergeben zur Anpassung an Öfen verschiedener Größe.

## Revendications

1. Dispositif de post-combustion pour moderniser un poêle construit sans ouverture(s) pour l'air secondaire pour brûler du bois ou d'autres types de biomasse, de coke ou de charbon, fournissant de l'air frais chauffé à une zone supérieure (14) de la chambre de combustion (13) du poêle, **caractérisé en ce que** le dispositif est constitué d'une plaque (1) qui est pliée et pourvue d'orifices (4, 6), la plaque (1) ayant un certain nombre d'orifices ou fentes (4) près d'une extrémité pliée (16a) de la plaque (1), les orifices ou fentes (4) étant agencés au niveau du bord supérieur lors de l'installation pour permettre à l'air de parvenir à ladite zone (14),
dans lequel la plaque (1) possède des plis le long de toutes les extrémités pour créer une chambre lors de l'installation sur le côté interne d'une paroi latérale ou arrière dudit poêle, et pour la coopération avec au moins une ouverture d'air secondaire (2) agencée dans ladite paroi lors de l'installation de la plaque (1) dans le poêle, l'au moins une ouverture d'air secondaire (2) étant agencée dans une position juste au-dessus d'une extrémité inférieure pliée (16b) de la plaque (1) lors de son installation, moyennant quoi l'air peut être préchauffé tout en montant derrière la plaque (1), la plaque (1) étant en outre pourvue d'orifices (6) près d'une extrémité pliée (16b) de la plaque (1) où les orifices (6) sont agencés vers le bord inférieur lors de l'installation afin d'établir et de maintenir une veilleuse.

2. Dispositif de post-combustion selon la revendication 1,
**caractérisé en ce que** la plaque (1) est constituée de deux parties (15a, 15b) qui peuvent être mutuellement déplacées pour fournir une dimension réglable dans une direction latérale lors de l'installation, pour l'adaptation à des poêles de tailles différentes.

3. Système comprenant un dispositif de post-combustion selon la revendication 1 ou 2 et un poêle construit sans ouverture(s) pour l'air secondaire pour brûler du bois ou d'autres types de biomasse, de coke ou de charbon, le système permettant de fournir de l'air frais chauffé à une zone supérieure (14) de la chambre de combustion (13) du poêle, **caractérisé en ce que** le dispositif est constitué d'une plaque (1) qui est pliée et pourvue d'orifices (4, 6), la plaque (1) ayant un certain nombre d'orifices ou fentes (4) près d'une extrémité pliée (16a) de la plaque (1), les orifices ou fentes (4) étant agencés au niveau du bord supérieur lors de l'installation pour permettre à l'air de parvenir à ladite zone (14),
une ouverture d'air secondaire (2) étant percée à travers la plaque latérale ou arrière du poêle pour permettre à l'air de pénétrer au fond de la chambre définie par la plaque pliée (1) et la paroi latérale et arrière, l'ouverture secondaire (2) étant agencée dans une position juste au-dessus d'une extrémité inférieure pliée (16b) de la plaque (1) lors de son installation, moyennant quoi l'air peut être préchauffé tout en montant derrière la plaque (1), la plaque (1) étant en outre pourvue d'orifices (6) près d'une extrémité pliée (16b) de la plaque (1) où les orifices (6) sont agencés vers le bord inférieur lors de l'installation afin d'établir et de maintenir une veilleuse.

4. Système selon la revendication 3,
**caractérisé en ce que** la plaque (1) est constituée de deux parties (15a, 15b) qui peuvent être mutuellement déplacées pour fournir une dimension réglable dans une direction latérale lors de l'installation, pour l'adaptation à des poêles de tailles différentes.
